**Europäisches Patentamt**

**European Patent Office**

**Office européen des brevets**

(11) Numéro de publication: **0 306 400 B1**

(12) **FASCICULE DE BREVET EUROPEEN**

(45) Date de publication de fascicule du brevet: **11.11.92**　(51) Int. Cl.5: **G02F 1/01**, G02F 1/015

(21) Numéro de dépôt: **88402182.5**

(22) Date de dépôt: **30.08.88**

(54) **Modulateur pour onde électromagnétique, à puits quantiques, et utilisation de ce modulateur comme polariseur.**

(30) Priorité: **01.09.87 FR 8712153**

(43) Date de publication de la demande:
**08.03.89 Bulletin 89/10**

(45) Mention de la délivrance du brevet:
**11.11.92 Bulletin 92/46**

(84) Etats contractants désignés:
**DE GB IT NL SE**

(56) Documents cités:
**WO-A-84/03363**
**US-A- 3 809 953**

**"Integrated Optics", R.G. Hunsperger,
Springer-Verlag, Berlin, 1982, pp 43-46**

(73) Titulaire: **THOMSON-CSF**
**51, Esplanade du Général de Gaulle**
**F-92800 Puteaux(FR)**

(72) Inventeur: **Delacourt, Dominique**
**Thomson-CSF SCPI 19, avenue de Messine**
**F-75008 Paris(FR)**
Inventeur: **Papuchon, Michel**
**Thomson-CSF SCPI 19, avenue de Messine**
**F-75008 Paris(FR)**
Inventeur: **Pocholle, Jean-Paul**
**Thomson-CSF SCPI 19, avenue de Messine**
**F-75008 Paris(FR)**

(74) Mandataire: **Sciaux, Edmond et al**
**THOMSON-CSF SCPI**
**F-92045 PARIS LA DEFENSE CEDEX 67(FR)**

## Description

L'invention concerne un modulateur pour moduler en amplitude ou en phase une onde électromagnétique, notamment dans le domaine s'étendant des ondes visibles jusqu'aux ondes infra-rouges lointaines. L'onde à moduler peut être une onde guidée ou une onde libre.

Il est connu de réaliser des modulateurs fonctionnant dans le domaine de l'infra-rouge moyen et mettant en oeuvre une injection de porteurs. Ce type de modulateur a une bande passante limitée à cause de la durée de vie importante des porteurs. Il est connu aussi de réaliser des modulateurs à effet électro-optique. Cet effet est très rapide, mais il n'est pas possible d'obtenir une bande passante correspondant à la rapidité de cet effet, car ces modulateurs comportent des électrodes, destinées à l'application d'un champ électrique, qui ont des capacités relativement importantes.

Dans les modulateurs classiques la bande passante est fonction des dimensions du modulateur. Ce problème de bande passante s'aggrave quand la longueur d'onde augmente car les dimensions d'un modulateur augmentent avec la longueur d'onde de l'onde à moduler. En particulier la réalisation d'un modulateur pour onde du domaine de l'infrarouge moyen est beaucoup plus difficile que la réalisation d'un modulateur pour onde du domaine du visible ou du proche infra-rouge.

Le but de l'invention est de proposer un modulateur dont la bande passante soit plus large que celle des modulateurs classiques pour des ondes du domaine de l'infra-rouge moyen ou lointain. L'objet de l'invention est un modulateur mettant en jeu une interaction optique-optique, au sein de matériaux semiconducteurs, entre une première onde dite onde à moduler et une seconde onde, généralement de fréquence supérieure, dite onde de commande, portant le signal modulant, sous la forme d'une modulation d'amplitude. Cette interaction est rendue possible par l'utilisation de structures quantiques à au moins deux niveaux discrets. Un modulateur à puits quantiques, qui utilise la saturation excitonique (transition inter-bandes) comportant les éléments indiqués dans le préambule de la revendication 1 est divulgué dans le document WO-A-84/03363. Dans le modulateur selon l'invention, l'onde à moduler peut appartenir par exemple au domaine de l'infra-rouge moyen alors que l'onde de commande peut appartenir au domaine visible ou infra-rouge proche, dans lequel il est facile de réaliser des modulateurs classiques.

Le modulateur selon l'invention peut aussi être utilisé comme polariseur commandable.

Selon l'invention, un modulateur pour onde électromagnétique comprenant des moyens pour appliquer au modulateur une onde d'une première gamme de fréquences, dite onde à moduler ; des moyens fournissant une onde de commande d'une deuxième gamme de fréquences éclairant le modulateur ; au moins une première couche de matériau semiconducteur d'un premier type, comprise entre deux secondes couches d'un matériau semiconducteur d'un second type, toutes les couches étant traversées par l'onde à moduler et par l'onde de commande ; les deux types de matériaux étant tels qu'il y ait un puits de potentiel dans la bande de conduction et dans la bande de valence de chaque première couche ; caractérisé en ce que l'épaisseur de chaque première couche est telle que les électrons de sa bande de conduction possèdent au moins deux niveaux discrets d'énergie permis dont la différence d'énergie correspond à une fréquence proche de la première gamme de fréquences de l'onde à moduler et telle que les trous de sa bande de valence possèdent des niveaux d'énergie permis tels que la différence d'énergie entre le niveau fondamental permis pour les trous dans la bande de valence et le niveau fondamental permis pour les électrons dans la bande de conduction, a une valeur proche de celle correspondant à la deuxième gamme de fréquences de l'onde de commande.

L'invention sera mieux comprise et d'autres détails apparaîtront à l'aide de la description ci-dessous et des figures l'accompagnant :

- la figure 1 représente un diagramme des niveaux d'énergie dans la structure quantique utilisée dans le modulateur selon l'invention ;
- la figure 2 représente un diagramme des niveaux d'énergie dans cette structure quantique pour un exemple de choix des matériaux constituant le modulateur selon l'invention ;
- la figure 3 représente les graphes de la partie réelle et de la partie imaginaire de l'indice de réfraction dans la structure quantique, en fonction de la fréquence de l'onde à moduler ;
- la figure 4 représente un premier exemple de réalisation d'un modulateur selon l'invention, pour moduler une onde guidée selon une seule dimension ;
- la figure 5 représente les graphes de l'absorption et du déphasage de l'onde à moduler, en fonction de sa fréquence ;
- la figure 6 représente un second exemple de réalisation du modulateur selon l'invention, pour moduler une onde guidée selon deux dimensions ;
- la figure 7 représente un troisième exemple de réalisation du modulateur selon l'invention, pour moduler une onde en propagation libre.

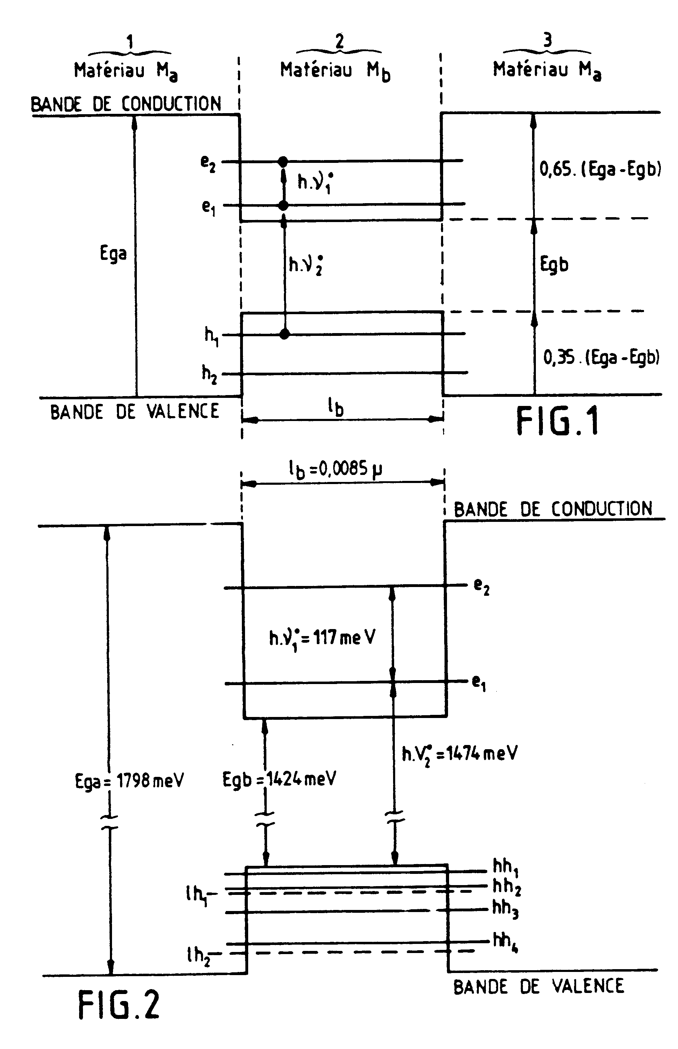

Le diagramme de la figure 1 représente les niveaux d'énergie des porteurs dans la structure quantique utilisée dans le modulateur selon l'invention. Cette structure quantique comporte une couche 2 de matériau semiconducteur d'un premier type, noté $M_b$, et deux couches, 1 et 3, d'un matériau semi-conducteur d'un second type noté $M_a$, situées de part et d'autre de la couche 2. Les couches 1 et 3 ont une bande interdite de largeur $E_{ga}$ alors que la couche 2 a une bande interdite de largeur $E_{gb}$ inférieure à $E_{ga}$.

Il est généralement admis que la différence entre ces deux largeurs se répartit entre la bande de conduction et la bande de valence, selon des proportions voisines de 65% et 35% respectivement.

L'association de ces trois couches de matériau semi-conducteur ayant des largeurs de bande interdite différentes permet la création d'un puits de potentiel pour les électrons dans la bande de conduction, et pour les trous dans la bande de valence. Lorsque les dimensions de ce puits sont proches des longueurs d'ondes de de Broglie associées à ces particules, l'énergie totale qui leur est permise ne peut prendre qu'un nombre fini de valeurs discrètes. Ce nombre de valeurs et ces valeurs sont directement fonctions des dimensions des puits quantiques et des caractéristiques des matériaux semi-conducteurs.

La structure quantique utilisée dans le modulateur selon l'invention a une seule dimension : l'épaisseur, $I_b$, de la couche 2. Le puits possède alors deux niveaux discrets d'énergie permis, $e_1$ et $e_2$, pour les électrons dans la bande de conduction, et deux niveaux $h_1$ et $h_2$ pour les trous dans la bande de conduction. Pour simplifier, tous les trous de la bande de valence sont supposés posséder les mêmes caractéristiques, ce qui conduit à l'existence de seulement deux niveaux discrets d'énergie permis $h_1$ et $h_2$.

Le matériau semi-conducteur constituant la couche 2 n'a pas de dopage. Il a seulement un dopage résiduel, aussi faible que le permet la technologie, afin que le niveau fondamental $e_1$ de la bande de conduction dans le puits quantique soit désert afin d'obtenir une efficacité de modulation maximale. Les couches 1 et 3 sont constituées elles aussi d'un matériau semi-conducteur non dopé. Si les trois couches comportaient un dopage, l'efficacité de modulation serait diminuée, mais il y aurait encore un effet de modulation.

Le fonctionnement du modulateur selon l'invention consiste à peupler le niveau $e_1$ par un pompage optique au moyen d'une onde de commande ayant une fréquence $\nu_2$ proche d'une fréquence $\nu_2{}^0$ correspondant à la différence d'énergie entre le niveau fondamental $h_1$ dans la bande de valence et le niveau fondamental $e_1$ dans la bande de conduction, dans le puits quantique. Le peuplement du niveau $e_1$ permet ensuite une transition résonnante du niveau $e_1$ au niveau $e_2$ et modifie ainsi

notablement les caractéristiques optiques des matériaux formant le puits quantique.

Une onde de fréquence $\nu_1$ proche d'une fréquence $\nu_1{}^0$ correspondant à la différence d'énergie entre les niveaux $e_1$ et $e_2$, subit une absorption et un déphasage qui sont fonctions du peuplement du niveau $e_1$. Ce peuplement étant fonction de l'amplitude de l'onde de pompage, il est possible de moduler l'onde de fréquence $\nu_1$, en amplitude ou en phase, en agissant sur l'amplitude de l'onde de commande assurant le pompage optique.

En l'absence de pompage optique, cette structure quantique est tout à fait transparente à l'onde à moduler car l'énergie de ces photons, $h.\nu_1$, où $h$ est la constante de Planck, est inférieure aux largeurs $E_{ga}$ et $E_{gb}$ des bandes interdites des matériaux $M_a$ et $M_b$.

Pour des raisons de symétrie, la transition du niveau $h_2$ au niveau $e_1$ ne peut pas se produire. La transition du niveau $h_2$ au niveau $e_2$ n'est pas à rechercher.

La figure 2 représente un diagramme des niveaux d'énergie analogue à celui de la figure 1, pour un exemple de réalisation dans lequel les couches 1 et 3 sont constituées de $Ga_{0,7}Al_{0,3}As$ et où la couche 1 est constituée de GaAs. Pour ces matériaux $E_{ga}$ est égale à 1798 meV et $E_{gb}$ est égale à 1424 meV. Pour une épaisseur $I_b$ = 0,0085 microns, les niveaux d'énergie permis sont tels que la transition du niveau $e_1$ au niveau $e_2$ correspondà une différence d'énergie de 117 meV et à une longueur d'onde de 10,6 microns. L'onde à moduler doit donc avoir une longueur d'onde voisine de cette valeur.

Les trous lourds ont quatre niveaux d'énergie permis : $hh_1$, ..., $hh_4$. Les trous légers ont deux niveaux d'énergie permis $lh_1$ et $lh_2$. La différence d'énergie entre le niveau fondamental permis pour les trous lourds, $hh_1$, et le niveau fondamental permis pour les électrons, $e_1$, dans la bande de conduction, est égal à 1474 meV, ce qui correspond à une longueur d'onde de 0,84 micron. La longueur d'onde de l'onde de commande doit donc être voisine de cette valeur pour réaliser le pompage optique et peut donc être facilement obtenue avec un laser semiconducteur. Cet exemple montre qu'il est possible de réaliser une interaction au sein de cette structure quantique entre une onde du domaine infra-rouge très proche et une onde du domaine infra-rouge moyen, cette dernière pouvant être fournie, par exemple, par un laser à gaz $CO_2$.

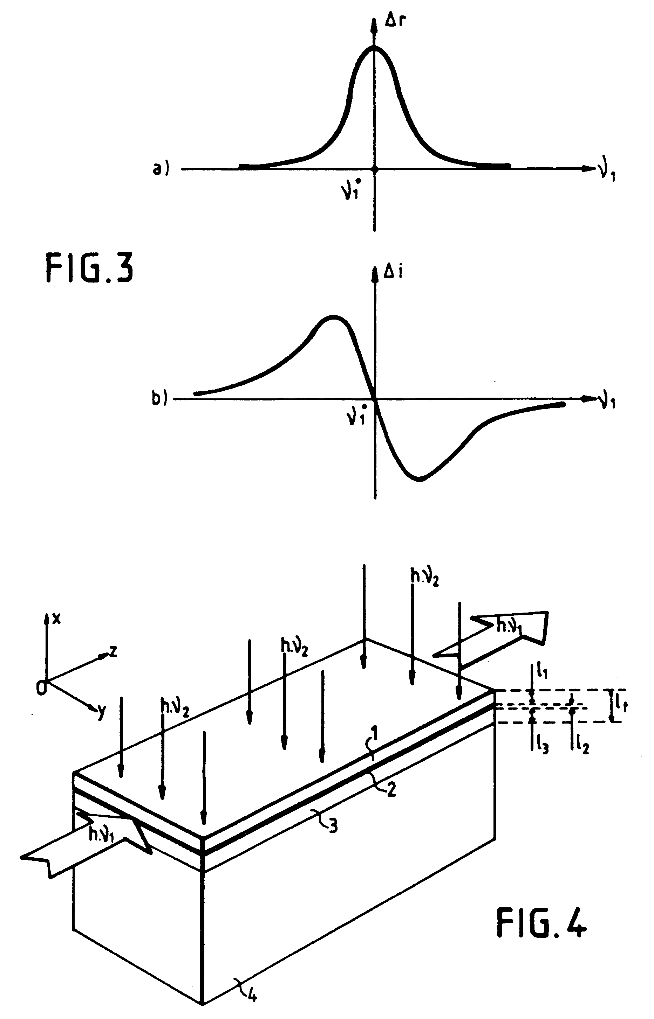

Les figures 3a et 3b représentent respectivement le graphe de la partie réelle $\Delta r$ et de la partie imaginaire $\Delta i$ de l'indice de réfraction dans la structure quantique au voisinage de la fréquence $\nu_1{}^0$ correspondant exactement à la transition résonnante du niveau $e_1$ au niveau $e_2$. Le graphe de la partie réelle a la forme d'une cloche centrée sur la

fréquence $\nu_1{}^0$ alors que le graphe de la partie imaginaire a une forme de S centré sur la fréquence $\nu_1{}^0$, avec un minimum et un maximum de part et d'autre de cette fréquence. Ces courbes de dispersion anormale mettent en évidence les possibilités de modulation en phase ou en amplitude d'une onde de fréquence $\nu_1$ voisine de la fréquence $\nu_1{}^0$.

La figure 4 représente schématiquement un premier exemple de réalisation du modulateur selon l'invention, pour moduler une onde guidée par confinement selon une seule dimension. Il comporte trois couches : 1, 2, 3, de matériaux semiconducteurs $M_a$, $M_b$, $M_a$, respectivement déposées par épitaxies successives, sur un substrat 4 lui-même constitué d'un matériau semi-conducteur. Les trois couches 1 à 3 et le substrat 4 possèdent la même structure cristalline et leurs paramètres de maille sont tous identiques ou très voisins. Ces trois couches correspondent aux trois couches du diagramme représenté sur la figure 1. L'épaisseur de la couche 2 est telle qu'un puits quantique à deux niveaux permis $e_1$ et $e_2$ est réalisé dans la bande de conduction.

L'onde à moduler, notée $h.\nu_1$, est appliquée dans les couches 1, 2, 3 parallèlement à leur plan, et ressort parallèlement à leur plan après les avoir traversées longitudinalement. L'ensemble des couches 1 à 3 constitue la zone guidant la lumière. Son épaisseur $l_t$ ainsi que la valeur des indices des matériaux sont choisies de telle façon que ces trois couches assurent le guidage d'au moins un mode de propagation pour des fréquences voisines de $\nu_1{}^0$. Les épaisseurs $l_1$ et $l_3$ des couches 1 et 3 respectivement sont choisies de façon à optimiser le recouvrement du ou des modes de propagation que l'on désire moduler, avec la perturbation qui est localisée dans la région du puits quantique.

L'onde de commande, notée $h.\nu_2$, traverse les couches 1, 2, 3 perpendiculairement au plan de ces couches, dans cet exemple. Elle peut avoir un angle d'incidence quelconque. L'onde de commande est fournie par exemple par un modulateur classique, non représenté, dont la réalisation, pour la fréquence $\nu_2$, est à la portée de l'homme de l'Art. Ce modulateur classique reçoit : d'une part, une onde de fréquence $\nu_2$ ayant une amplitude constante et qui est fournie par une diode laser par exemple ; et d'autre part, un signal électrique modulant, représentant par exemple une suite de données binaires. La couche 1 est transparente pour l'onde de commande puisque son énergie $h.\nu_2$ est inférieure à la largeur $E_{ga}$ de la bande interdite de la couche 1.

Les modes de propagation dans ce type de guide peuvent être décomposés en deux familles, les modes TE (Transverses Electriques) pour lesquels la seule composante du champ électrique qui est associée à la propagation est dirigée suivant un axe oy, et les modes TM (Transverses Magnétiques) pour lesquels le champ électrique possède une composante suivant un axe ox et une composante suivant un axe oz, l'axe oz étant parallèle à la direction de propagation de l'onde guidée, l'axe oy étant parallèle au grand côté de la section du guide et l'axe ox étant parallèle au petit côté de la section du guide. On démontre que seuls subiront l'influence de la transition du niveau $e_1$ au niveau $e_2$, les modes possédant une composante non nulle du champ électrique dans la direction perpendiculaire au plan des barrières de potentiel du puits quantique, c'est-à-dire perpendiculaire au plan du guide. Le cas le plus favorable pour la modulation correspond en outre à l'utilisation d'un guide possèdant un seul mode TM.

Le modulateur selon l'invention peut être utilisé pour réaliser soit une modulation d'amplitude, soit une modulation de phase, soit une polarisation commandable. Le type de modulation obtenu dépend de l'écart entre la fréquence $\nu_1$ de l'onde à moduler et la fréquence $\nu_1{}^0$.

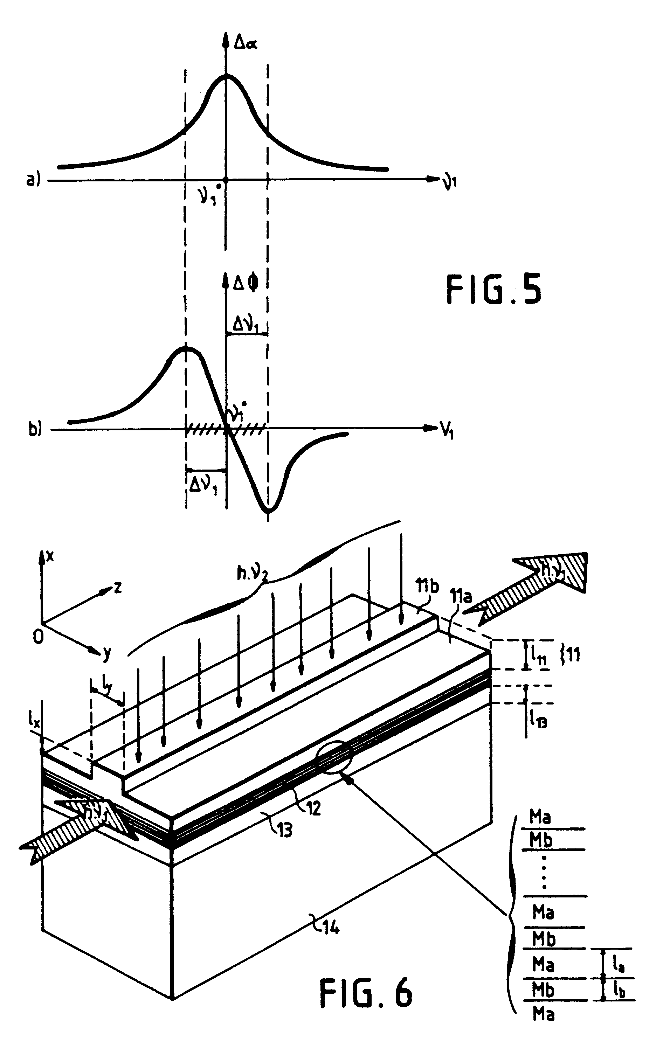

Les figures 5a et 5b représentent respectivement le graphe de l'absorption $\Delta\alpha$ par unité de longueur du guide, et le déphasage $\Delta\emptyset$ de cette onde en fonction de la fréquence $\nu_1$. Le premier graphe a une forme en cloche centrée sur la fréquence $\nu_1{}^0$ et le second graphe a une forme en S centré sur la fréquence $\nu_1{}^0$, et possèdant un maximum et un minimum décalés en fréquence d'une valeur $\Delta\nu_1$ par rapport à $\nu_1{}^0$.

Pour utiliser le modulateur comme modulateur d'amplitude avec un minimum de modulation de phase il est nécessaire que la fréquence $\nu_1$ de l'onde à moduler soit proche de $\nu_1{}^0$ avec un écart inférieur à $\Delta\nu_1$. Alors que pour utiliser le modulateur comme modulateur de phase avec un minimum de modulation d'amplitude, il est nécessaire que la fréquence $\nu_1$ soit écartée d'au moins $\Delta\nu_1$ par rapport à $\nu_1{}^0$, pour obtenir un fort déphasage $\Delta\emptyset$ tout en réduisant le plus possible l'absorption $\Delta\alpha$. La zone hachurée sur la figure 5b correspond au domaine de fréquences à éviter dans ce dernier cas.

Ce modulateur peut être utilisé aussi comme polariseur commandable. En effet, comme mentionné précédemment, seuls les modes TM peuvent être absorbés par une transition des électrons du niveau $e_1$ au niveau $e_2$ du puits quantique. Dans le cas où des modes de deux types, TE et TM, sont excités à l'entrée du guide, les modes TE conservent leur amplitude initiale alors que les modes TM sont absorbés lorsque le puits quantique est éclairé à la fréquence $\nu_2$. Les amplitudes des modes des deux types restent inchangées en l'absence de cet éclairement. Par conséquent, ce modulateur peut être utilisé comme polariseur à commande optique. Le recouvrement entre la zone de perturbation et les zones de propagation des différents modes varie avec l'ordre et la nature de ces derniers. Le meilleur mode de réalisation du modulateur, pour l'utiliser comme polariseur, comporte un guide possèdant un seul mode TE et un seul mode TM, et la fréquence de l'onde à polariser doit être la plus proche possible de $\nu_1{}^0$.

Le modulateur selon l'invention permet de réaliser aussi un polariseur à commande électrique, en l'associant à un modulateur classique ou à un commutateur optique commandé électriquement pour arrêter ou transmettre une onde de fréquence $\nu_2$ fournie, par exemple, par une diode laser.

La faible extension de la zone où les propriétés optiques varient en fonction du signal modulant, a pour conséquence que le recouvrement entre les zones de propagation des modes optiques et la zone de perturbation, est faible. Par conséquent l'efficacité de modulation est peu élevée lorsqu'il n'y a qu'une seule structure quantique telle que décrite précédemment. Pour augmenter ce recouvrement, il est possible de multiplier le nombre de puits quantiques en empilant, en alternance, des couches de matériaux semi-conducteurs des deux types, pour constituer une série de puits quantiques.

La figure 6 représente un second exemple de réalisation du modulateur selon l'invention, comportant une pluralité de puits quantiques. D'autre part, cet exemple de réalisation a une configuration particulière permettant un confinement bidimensionnel de l'onde à moduler. Il comporte : une première couche 11 destinée à assurer le confinement bidimensionnel, constitué de matériau semi-conducteur du premier type $M_a$ ; une succession périodique de couches de matériau $M_b$ et de matériau $M_a$ , respectivement d'épaisseur $l_b$ et $l_a$ constituant une zone 12 appelée multipuits quantiques ; une couche 13 de matériau de type $M_a$ ; et un substrat 14.

La première couche 11 comporte une nervure plane 11b disposée le long du grand axe de symétrie de la couche 11, et en saillie par rapport à une partie plane 11a. La partie plane 11a est obtenue par une réduction $l_x$ de l'épaisseur $l_{11}$ de la couche 11. L'épaisseur de la nervure 11a est donc $l_x$ et sa largeur est notée $l_y$ . L'onde à moduler $h.\nu_1$ se propage dans la direction du grand axe de symétrie de la rainure 11a.

L'épaisseur $l_a$ détermine la largeur des barrières de potentiel séparant les puits et elle doit être suffisamment grande pour interdire le couplage de ces puits, c'est-à-dire pour que l'état d'un électron dans un puits soit indépendant de l'état des électrons dans les autres puits. L'épaisseur $l_b$ est telle que les puits possèdent au moins deux niveaux discrets d'énergie permis dans la bande de conduction. La multiplicité du nombre de puits a pour effet non seulement d'améliorer le recouvrement entre la perturbation recherchée et le mode guidé, mais aussi d'augmenter le nombre d'électrons disponibles sur le niveau $e_1$ , ce qui repousse le seuil de saturation des transitions du niveau $h_1$ au niveau $e_1$ et du niveau $e_1$ au niveau $e_2$ .

Dans cet exemple de réalisation, le confinement de l'onde à moduler étant bidimensionnel, les modes ne sont plus exactement TE et TM, mais quasi TE et quasi TM. Néanmoins, les composantes principales du champ électrique sont situées sur l'axe oy pour les modes quasi TE et sur l'axe ox pour les modes quasi TM. Pratiquement seuls ces derniers subissent donc l'influence de la transition du niveau $e_1$ au niveau $e_2$ . Cet exemple de réalisation permet donc, lui aussi, de moduler en phase ou en amplitude une onde guidée de fréquence $\nu_1$ , par un éclairement à la fréquence $\nu_2$ , appliqué sur la largeur $l_y$ de la nervure 11b. La largeur $l_y$ et l'épaisseur $l_x$ de cette rainure par rapport à la partie plate 11a, sont calculées par un procédé classique, en fonction du nombre de modes acceptés pour le guide. La meilleure efficacité de modulation est obtenue par l'utilisation d'un guide possèdant un seul mode quasi TM. De même, l'épaisseur $l_{11}$ et $l_{13}$ des couches 11 et 13 est déterminée par un procédé classique en fonction des caractéristiques souhaitées pour le guide.

Les exemples de réalisation décrits précédemment conviennent très bien pour moduler une onde guidée, car l'interaction entre l'onde guidée et la perturbation est réalisée sur une distance de propagation importante. En effet, elle est égale à la longueur des couches puisque l'onde guidée se propage parallèlement au plan des couches et reste confinée dans ces couches. Le cas d'une onde libre est différent car elle ne peut pas rester confinée dans ces couches. L'interaction est alors limitée à une distance de propagation approximativement égale à l'épaisseur de la couche, ou des couches, de matériau $M_b$ , qui est beaucoup plus faible que la longueur des couches. Dans l'exemple décrit précédemment, cette épaisseur est égale à 0,0085 micron par couche de matériau $M_b$ . Pour augmenter l'efficacité de l'interaction il est nécessaire de multiplier le nombre de couples de couches de matériau $M_a$ et de matériau $M_b$ . Ce nombre de couples peut être égal à 100 par exemple.

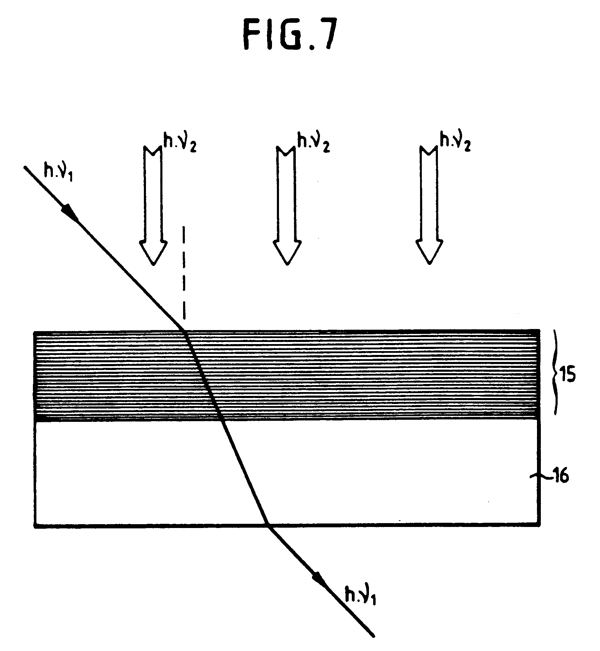

La figure 7 représente un exemple de réalisation du modulateur selon l'invention, particulièrement adapté pour moduler une onde non guidée. Il comporte un multipuits quantique 15, constitué de 100 couples de couches de matériau $M_a$ et de matériau $M_b$ , réalisées de manière analogue à celles des exemples de réalisation précédents, sur un substrat 16. L'onde à moduler, notée $h.\nu_1$, est appliquée avec un angle d'incidence quelconque, mais non nul par rapport à la normale aux couches 15, pour obtenir une interaction efficace pour des polarisations optiques parallèles au plan d'incidence.

L'onde à moduler traverse le substrat 16 et ressort parallèlement à sa direction d'incidence. Pour être transparent, le substrat 16 est constitué d'un matériau semi-conducteur non dopé d'épaisseur quelconque, ou bien d'un matériau dopé ayant une très faible épaisseur. L'onde de commande, notée $h.\nu_2$ , est appliquée avec une incidence nulle par rapport à la normale aux couches, dans cet exemple.

L'invention n'est pas limitée aux exemples de réalisation décrits précédemment. Il est à la portée de l'homme de l'art de choisir d'autres matériaux pour permettre la modulation d'une onde appartenant à un domaine de longueur d'onde différent, ou pour utiliser une onde de commande appartenant à un domaine de longueur d'onde différent.

L'invention est applicable notamment à l'optique guidée active dans le domaine de l'infra-rouge moyen et lointain.

## Revendications

1. Modulateur pour onde électromagnétique comprenant des moyens pour appliquer au modulateur une onde ($h\nu_1$) d'une première gamme de fréquences ($\nu_1$), dite onde à moduler ; des moyens fournissant une onde de commande ($h\nu_2$) d'une deuxième gamme de fréquences ($\nu_2$) éclairant le modulateur ; au moins une première couche (2) de matériau semiconducteur d'un premier type ($M_b$), comprise entre deux secondes couches (1, 3) d'un matériau semiconducteur d'un second type ($M_a$), toutes les couches (1, 2, 3) étant traversées par l'onde à moduler ($h\nu_1$) et par l'onde de commande ($h\nu_2$) ; les deux types de matériaux ($M_a$, $M_b$) étant tels qu'il y ait un puits de potentiel dans la bande de conduction et dans la bande de valence de chaque première couche (2) ; caractérisé en ce que l'épaisseur de chaque première couche (2) est telle que les électrons de sa bande de conduction possèdent au moins deux niveaux discrets d'énergie permis ($e_1$, $e_2$) dont la différence d'énergie correspond à une fréquence ($\nu_1{}^0$) proche de la première gamme de fréquences ($\nu_1$) de l'onde à moduler et telle que les trous de sa bande de valence possèdent des niveaux d'énergie permis ($h_1$, $h_2$, ...) tels que la différence d'énergie entre le niveau fondamental permis pour les trous ($h_1$) dans la bande de valence et le niveau fondamental ($e_1$) permis pour les électrons dans la bande de conduction, a une valeur ($h\nu_2{}^0$) proche de celle correspondant à la deuxième gamme de

fréquences ($\nu_2$) de l'onde de commande.

2. Modulateur selon la revendication 1, caractérisé en ce que pour moduler une onde guidée par confinement monodimensionnel, les couches (1 à 3) sont traversées par l'onde à moduler ($h.\nu_1$) parallèlement à leur plan ; et en ce que l'épaisseur totale ($l_t$) de ces couches (1 à 3) est telle qu'elles assurent le guidage d'au moins un mode transverse magnétique pour la première gamme des fréquences ($\nu_1$) de l'onde à moduler ; et en ce que l'épaisseur des secondes couches (1, 3) est telle qu'il y ait un bon recouvrement du ou des modes de l'onde à moduler ($h.\nu_1$) avec une perturbation engendrée par l'onde de commande ($h.\nu_2$) dans chaque première couche (2).

3. Modulateur selon la revendication 1, caractérisé en ce que pour moduler une onde guidée par confinement bidimensionnel, les couches (1 à 3) sont traversées par l'onde à moduler ($h.\nu_1$) parallèlement à leur plan ; et en ce que l'épaisseur totale ($l_t$) de ces couches (1 à 3) est telle qu'elles assurent le guidage d'au moins un mode transverse magnétique pour la première gamme de fréquences ($\nu_1$) de l'onde à moduler ; et en ce que la seconde couche la plus superficielle (1) a une épaisseur non uniforme, cette couche (1) comportant une réduction d'épaisseur ($l_x$) de part et d'autre d'une nervure (11b), dont le grand axe correspond à la direction de propagation de l'onde à moduler ($h.\nu_1$), la largeur ($l_y$) de la nervure (11b) et la réduction d'épaisseur ($l_x$) étant choisies en fonction des modes de propagation souhaités.

4. Modulateur selon la revendication 1, caractérisé en ce que, pour moduler une onde non guidée, il comporte une pluralité de couches (15) de matériau du premier et du second type ($M_a$, $M_b$), empilées en alternance, sur un substrat (16) transparent pour l'onde à moduler ($h.\nu_1$) ; et en ce que la lumière à moduler ($h.\nu_1$) traverse les couches (15) avec un angle d'incidence non nul.

5. Utilisation d'un modulateur selon l'une des revendications 1 à 3 pour polariser une onde lumineuse guidée comportant au moins un mode transverse électrique et au moins un mode transverse magnétique.

6. Utilisation d'un modulateur pour onde électromagnétique pour moduler une onde ($h\nu_1$) d'une première gamme de fréquences ($\nu_1$), dite onde à moduler ; comprenant des moyens fournissant une onde de commande ($h\nu_2$)

d'une deuxième gamme de fréquences ($\nu_2$) éclairant le modulateur ; au moins une première couche (2) de matériau semiconducteur d'un premier type ($M_b$), comprise entre deux secondes couches (1, 3) d'un matériau semiconducteur d'un second type ($M_a$), toutes les couches (1, 2, 3) étant traversées par l'onde à moduler (h$\nu_1$) et par l'onde de commande (h$\nu_2$) ; les deux types de matériaux ($M_a$, $M_b$) étant tels qu'il y ait un puits de potentiel dans la bande de conduction et dans la bande de valence de chaque première couche (2) ; l'épaisseur de chaque première couche (2) étant telle que les électrons de sa bande de conduction possèdent au moins deux niveaux discrets d'énergie permis ($e_1$, $e_2$) dont la différence d'énergie correspond à une fréquence ($\nu_1^0$) proche de la première gamme de fréquences ($\nu_1$) de l'onde à moduler et telle que les trous de sa bande de valence possèdent des niveaux d'énergie permis ($h_1$, $h_2$, ...) tels que la différence d'énergie entre le niveau fondamental permis pour les trous ($h_1$) dans la bande de valence et le niveau fondamental ($e_1$) permis pour les électrons dans la bande de conduction, a une valeur (h$\nu_2^0$) proche de celle correspondant à la deuxième gamme de fréquences ($\nu_2$) de l'onde de commande.

## Claims

1. Modulator for electromagnetic wave comprising means for applying to the modulator a wave (h$\nu_1$) from a first frequency range ($\nu_1$), termed the wave to be modulated; means supplying a control wave (h$\nu_2$) from a second frequency range ($\nu_2$) illuminating the modulator; at least one first layer (2) of semiconductor material of a first type ($M_b$), included between two second layers (1, 3) of a semiconductor material of a second type ($M_a$), the wave to be modulated (h$\nu_1$) and the control wave (h$\nu_2$) passing through all the layers (1, 2, 3); the two material types ($M_a$, $M_b$) being such that there is a quantum well in the conduction band and in the valence band of each first layer (2); characterised in that the thickness of each first layer (2) is such that the electrons of its conduction band possess at least two discrete allowed energy levels ($e_1$, $e_2$) whose energy difference corresponds to a frequency ($\nu_1^0$) near the first frequency range ($\nu_1$) of the wave to be modulated and such that the holes of its valence band possess allowed energy levels ($h_1$, $h_2$, ...) such that the energy difference between the allowed ground level for the holes ($h_1$) in the valence band and the ground level ($e_1$) allowed for the electrons in the conduction band has a value (h$\nu_2^0$) near that corresponding to the second frequency range ($\nu_2$) of the control wave.

2. Modulator according to Claim 1, characterised in that, to modulate a wave guided by one-dimensional confinement, the wave to be modulated (h.$\nu_1$) passes through the layers (1 to 3) parallel to their plane; and in that the total thickness ($l_t$) of these layers (1 to 3) is such that they ensure the guiding of at least one transverse magnetic mode for the first range of frequencies ($\nu_1$) of the wave to be modulated; and in that the thickness of the second layers (1, 3) is such that there is a good overlap of the mode or modes of the wave to be modulated (h.$\nu_1$) with a perturbation brought about by the control wave (h.$\nu_2$) in each first layer (2).

3. Modulator according to Claim 1, characterised in that, to modulate a wave guided by two-dimensional confinement, the wave to be modulated (h.$\nu_1$) passes through the layers (1 to 3) parallel to their plane; and in that the total thickness ($l_t$) of these layers (1 to 3) is such that they ensure the guiding of at least one transverse magnetic mode for the first frequency range ($\nu_1$) of the wave to be modulated; and in that the second, most superficial layer (1) has a non-uniform thickness, this layer (1) containing a thickness reduction ($l_x$) on either side of a rib (11b), whose large axis corresponds to the direction of propagation of the wave to be modulated (h.$\nu_1$), the width ($l_y$) of the rib (11b) and the thickness reduction ($l_x$) being chosen as a function of the desired modes of propagation.

4. Modulator according to Claim 1, characterised in that, to modulate an unguided wave it contains a plurality of layers (15) of material of the first and of the second type ($M_a$, $M_b$), stacked alternately, on a substrate (16) which is transparent in respect of the wave to be modulated (h.$\nu_1$); and in that the light to be modulated (h.$\nu_1$) passes through the layers (15) with a non-zero angle of incidence.

5. Use of a modulator according to one of Claims 1 to 3 to polarise a guided light wave containing at least one transverse electric mode and at least one transverse magnetic mode.

6. Use of a modulator for electromagnetic wave to modulate a wave (h$\nu_1$) from a first frequency range ($\nu_1$), termed the wave to be modulated; comprising means supplying a control wave

($h\nu_2$) from a second frequency range ($\nu_2$) illuminating the modulator; at least one first layer (2) of semiconductor material of a first type ($M_b$), included between two second layers (1, 3) of a semiconductor material of a second type ($M_a$), the wave to be modulated ($h\nu_1$) and the control wave ($h\nu_2$) passing through all the layers (1, 2, 3); the two material types ($M_a$, $M_b$) being such that there is a quantum well in the conduction band and in the valence band of each first layer (2); the thickness of each first layer (2) being such that the electrons of its conduction band possess at least two discrete allowed energy levels ($e_1$, $e_2$) whose energy difference corresponds to a frequency ($\nu_1^0$) near the first frequency range ($\nu_1$) of the wave to be modulated and such that the holes of its valence band possess allowed energy levels ($h_1$, $h_2$, ...) such that the energy difference between the allowed ground level for the holes ($h_1$) in the valence band and the ground level ($e_1$) allowed for the electrons in the conduction band has a value ($h\nu_2^0$) near that corresponding to the second frequency range ($\nu_2$) of the control wave.

**Patentansprüche**

1. Modulator für eine elektromagnetische Welle mit Mitteln, um an den Modulator eine Welle ($h\nu_1$) eines ersten Frequenzbereichs ($\nu_1$) als zu modulierende Welle auszulegen, mit Mitteln, die eine Steuerwelle ($h\nu_2$) eines zweiten Frequenzbereichs ($\nu_2$) liefern, die auf den Modulator gerichtet ist, mit mindestens einer ersten Schicht (2) aus Halbleitermaterial eines ersten Typs ($M_b$), die zwischen zwei zweiten Schichten (1, 3) eines Halbleitermaterials eines zweiten Typs ($M_a$) liegt, wobei alle diese Schichten (1, 2, 3) von der zu modulierenden Welle ($h\nu_1$) und der Steuerwelle ($h\nu_2$) durchquert werden und wobei die beiden Typen von Materialien ($M_a$, $M_b$) so gewählt sind, daß sich eine Potentialsenke im Leitband und im Valenzband jeder ersten Schicht (2) befindet, dadurch gekennzeichnet, daß die Dicke der ersten Schicht (2) so gewählt ist, daß die Elektronen ihres Leitbands mindestens zwei diskrete zugelassene Energieniveaus ($e_1$, $e_2$) besitzen, deren Energiedifferenz einer Frequenz ($\nu_1^0$) in der Nähe des ersten Frequenzbereichs ($\nu_1$) der zu modulierenden Welle entspricht, und daß die Dicke jeder ersten Schicht (2) so gewählt ist, daß die Löcher ihres Valenzbandes zugelassene Energieniveaus ($h_1$, $h_2$,...) besitzen, die so gewählt sind, daß die Energiedifferenz zwischen dem zugelassenen Fundamentalniveau für die Löcher ($h_1$) im Valenzband und dem zugelassenen Fundamentalniveau ($e_1$) für die Elektronen im Leitband einen Wert ($h\nu_2^0$) besitzt, der in der Nähe dessen liegt, der dem zweiten Frequenzbereich ($\nu_2$) der Steuerwelle entspricht.

2. Modulator nach Anspruch 1, dadurch gekennzeichnet, daß zur Modulation einer durch eindimensionale Einschließung geführten Welle die Schichten (1 bis 3) von der zu modulierenden Welle ($h\nu_1$) parallel zu ihrer Ebene durchquert werden und daß die Gesamtdicke ($l_t$) dieser Schichten (1 bis 3) so gewählt ist, daß sie die Führung mindestens eines magnetischen Quermodes für den ersten Frequenzbereich ($\nu_1$) der zu modulierenden Welle sichern, und daß die Dicke der zweiten Schichten (1, 3) so gewählt ist, daß sich eine gute Überdeckung des Modes oder der Mode der zu modulierenden Welle ($h\nu_1$) mit einer durch die Steuerwelle ($h\nu_2$) in jeder ersten Schicht (2) erzeugten Störung ergibt.

3. Modulator nach Anspruch 1, dadurch gekennzeichnet, daß zur Modulation einer durch zweidimensionale Einschließung geführten Welle die Schichten (1 bis 3) von einer zu modulierenden Welle ($h\nu_1$) parallel zu ihrer Ebene durchquert werden, daß die Gesamtdicke ($l_t$) dieser Schichten (1 bis 3) so gewählt ist, daß sie die Führung mindestens eines magnetischen Quermodes für den ersten Frequenzbereich ($\nu_1$) der zu modulierenden Welle sichern, und daß die zweite Schicht (1), die der Oberfläche am nächsten kommt, eine ungleichmäßige Dicke besitzt, derart, daß zu beiden Seiten einer Rippe (11b), deren Hauptachse der Ausbreitungsrichtung der zu modulierenden Welle ($h\nu_1$) entspricht, diese Schicht (1) eine verringerte Dicke ($l_x$) besitzt, wobei die Breite ($l_y$) der Rippe (11b) und die Verringerung der Dicke ($l_x$) abhängig von den gewünschten Ausbreitungsmodi gewählt werden.

4. Modulator nach Anspruch 1, dadurch gekennzeichnet, daß zur Modulation einer ungeführten Welle eine Mehrzahl von Schichten (15) des ersten und zweiten Materialtyps ($M_a$, $M_b$) vorgesehen sind, die abwechselnd auf einem für die zu modulierende Welle ($h\nu_1$) durchlässigen Substrat gestapelt werden, und daß das zu modulierende Licht ($h\nu_1$) die Schichten (15) mit einem Einfallswinkel ungleich Null durchquert.

5. Verwendung eines Modulators nach einem der Ansprüche 1 bis 3 zur Polarisierung einer geführten Lichtwelle mit mindestens einem elektrischen und mindestens einem magnetischen Querausbreitungsmodus.

6. Verwendung eines Modulators für eine elektromagnetische Welle, um eine elektromagnetische Welle ($h\nu_1$) eines ersten Frequenzbereichs ($\nu_1$) zu modulieren, mit Mitteln, die eine Steuerwelle ($h\nu_2$) eines zweiten Frequenzbereichs ($\nu_2$) liefern, die auf den Modulator gerichtet ist, mit mindestens einer ersten Schicht (2) aus Halbleitermaterial eines ersten Typs ($M_b$), die zwischen zwei zweiten Schichten (1, 3) eines Halbleitermaterials eines zweiten Typs ($M_a$) liegt, wobei alle diese Schichten (1, 2, 3) von der zu modulierenden Welle ($h\nu_1$) und der Steuerwelle ($h\nu_2$) durchquert werden und wobei die beiden Typen von Materialien ($M_a$, $M_b$) so gewählt sind, daß sich eine Potentialsenke im Leitband und im Valenzband jeder ersten Schicht (2) befindet, wobei die Dicke der ersten Schicht (2) so gewählt ist, daß die Elektronen ihres Leitbands mindestens zwei diskrete der zugelassenen Energieniveaus ($e_1$, $e_2$) besitzen, deren Energiedifferenz einer Frequenz ($\nu_1{}^0$) in der Nähe des ersten Frequenzbereichs ($\nu_1$) der zu modulierenden Welle entspricht und daß die Dicke jeder ersten Schicht (2) so gewählt ist, daß die Löcher ihres Valenzbandes zugelassene Energieniveaus ($h_1$, $h_2$,...) besitzen, die so gewählt sind, daß die Energiedifferenz zwischen dem zugelassenen Fundamentalniveau für die Löcher ($h_1$) im Valenzband und dem zugelassenen Fundamentalniveau ($e_1$) für die Elektronen im Leitband einen Wert ($h\nu_2{}^0$) besitzt, der in der Nähe dessen liegt, der dem zweiten Frequenzbereich ($\nu_2$) der Steuerwelle entspricht.

$\overbrace{\qquad}^{1}$ Matériau $M_a$  $\overbrace{\qquad}^{2}$ Matériau $M_b$  $\overbrace{\qquad}^{3}$ Matériau $M_a$

BANDE DE CONDUCTION

$e_2$

$h.\nu_1^{\bullet}$

$e_1$

$0,65 . (Ega - Egb)$

$Ega$

$h.\nu_2^{\bullet}$

$Egb$

$h_1$

$0,35 . (Ega - Egb)$

$h_2$

BANDE DE VALENCE    $l_b$    FIG.1

$l_b = 0,0085\,\mu$

BANDE DE CONDUCTION

$e_2$

$h.\nu_1^{\bullet} = 117\,meV$

$e_1$

$h.\nu_2^{\bullet} = 1474\,meV$

$Ega = 1798\,meV$    $Egb = 1424\,meV$

$hh_1$
$hh_2$
$lh_1$
$hh_3$
$hh_4$
$lh_2$

BANDE DE VALENCE

FIG.2

FIG.3

FIG.4

FIG. 5

FIG. 6

# FIG.7